# FASCICULE DE BREVET EUROPEEN

(11) **EP 1 334 135 B1**
(45) Date de publication et mention de la délivrance du brevet: **12.10.2005**
(21) Numéro de dépôt: 01993624.4
(22) Date de dépôt: 06.11.2001
(51) Int. Cl.: C08F 8/30, C08F 8/34, A61M 1/36

(54) **RESINES DE POLYSTYRENE FONCTIONNALISE PAR DES GROUPEMENTS METHYL ESTER DE LA L-TYROSINE ET LEURS APPLICATIONS**
MITTELS L-TYROSIN-METHYLESTERGRUPPEN FUNKTIONALISIERTE POLYSTYRENHARZE UND VERWENDUNG DAVON
RESIN BASED ON POLYSTYRENE FUNCTIONALISED BY METHYL ESTER GROUPS OF L-TYROSINE AND THEIR USES

(30) Priorité: 13.11.2000 FR 0014542
(43) Date de publication de la demande: 13.08.2003
(73) Titulaire: Bioracs, 1110 Morges 1 (CH)
(72) Inventeur: JOZEFONVICZ, Jacqueline, F-60260 LAMORLAYE (FR); SIALI, Rosa, F-93200 SAINT-DENIS (FR); LAKHIARI, Hamid, F-93140 BONDY (FR); BOISSON-VIDAL, Catherine, F-75020 PARIS (FR)
(74) Mandataire: Goulard, Sophie
(86) Numéro de dépôt international: PCT/FR2001/003419
(87) Numéro de publication internationale: WO 2002/038616

(56) Documents cités:
- EP-A- 0 130 898
- EP-A- 0 161 468
- EP-A- 0 203 865
- EP-A- 0 304 377
- DE-A- 2 635 930
- DE-A- 4 342 154
- GB-A- 905 930

## Description

La présente invention est relative à des résines à base de polystyrène fonctionnalisé, leur procédé de fabrication, leur utilisation pour la fabrication de colonnes d'adsorption d'anticorps anti-facteur VIII, ainsi qu'à un procédé d'épuration *ex-vivo* d'anticorps anti-facteur VIII.

L'hémophilie A est due à une anomalie du gène qui synthétise un des facteurs de la coagulation sanguine, à savoir le facteur VIII. Cette maladie est répandue avec la même fréquence dans le monde entier et touche un individu pour 5000 naissances.

L'hémophilie A est une maladie hémorragique très grave, qui en l'absence de traitement entraîne la mort à plus ou moins brève échéance.

Le facteur VIII (FVIII) est un des facteurs essentiels intervenant dans le processus de la coagulation sanguine (hémostase). Le facteur VIII est une glycoprotéine labile dont la concentration plasmatique normale est très faible (50-100 ng/ml), (M. Verstraete *et al*., Advanc. Contracep., 1991, 7, 244-258).

Les traitements actuels, purement substitutifs, permettent d'apporter dans la circulation sanguine ce facteur de la coagulation déficitaire ou inexistant par le moyen de perfusion intraveineuse, ceci afin de rétablir une hémostase normale.

Une complication de ce traitement substitutif est l'apparition dans 25 à 30% des cas d'hémophilie sévère, d'allo-anticorps dirigés contre l'activité biologique du FVIII, neutralisant cette activité (Sultan Y., Gazette Médicale de France, 1978, **85,** 1017-1026 ; Aledort L. M., Hemophilia, 1998; **4,** 341-345 et Cabane J., Le Concours Médical, 1987, **109**, 139-142).

Lorsque cette complication apparaît, le traitement substitutif par .. l'apport du FVIII déficitaire devient inefficace, et il faut alors avoir recours à d'autres procédés pour traiter les hémophiles ainsi immunisés.

L'un des moyens possibles pour venir en aide aux hémophiles immunisés ainsi qu'aux sujets qui développent des auto-anticorps (anticorps anti-FVIII associés notamment à des maladies auto-immunes), est d'épurer le plasma sanguin de ces anticorps.

Ces anticorps sont des immunoglobulines G (IgG) synthétisées par les lymphocytes B du système immunitaire et appartenant majoritairement à des IgG₄ avec parfois des IgG₁ et des IgG₂.

Cette épuration plasmatique en anticorps anti-FVIII est en général réalisée par passage du plasma à épurer dans une colonne contenant un immuno-adsorbant, au moyen d'une circulation extra-corporelle.

Les colonnes utilisées pour réaliser cette opération peuvent être composées d'un gel d'agarose (Sépharose ®) sur lequel peuvent être fixés des anticorps anti-IgG humains.

C'est ainsi par exemple qu'il a déjà été proposé, notamment par Regnault V. *et al*., Tromb. Res., 1987, 45, 51-57, de fixer de façon covalente des anticorps anti-IgG₄ humains d'origine caprine sur un gel de Sépharose ®. Avec un tel support, il semble possible d'enlever 58 à 94% des anticorps anti-FVIII présents dans le plasma d'hémophiles, cependant ce support ne permet pas d'éliminer tous les anticorps anti-FVIII étant donné que certains d'entre eux appartiennent à la sous-classe des IgG₁.

Toujours dans le même but, il a également été proposé de coupler la protéine A extraite de *Staphylococcus aureus* à un gel de Sépharose ®. (Lee H. *et al*., Thromb. Res., 1979, **14**, 925-930). La protéine A réagit avec le fragment Fc des IgG de diverses espèces (Hjelm H. *et al*., Febs. Lett., 1972, **28**, 73-76). Chez l'homme, elle reconnaît le fragment Fc des IgG₁, des IgG₂ et des IgG₄.

Ses propriétés font de cette protéine un bon ligand pour la purification des IgG totales, c'est pourquoi elle est utilisée depuis longtemps dans la purification de nombreux anticorps.

Cependant, l'épuration plasmatique au moyen de colonnes composées de protéine A liée à un gel de Sépharose ® n'est pas spécifique des anticorps anti-FVIII et entraîne non seulement une diminution de 90% du taux plasmatique des IgG totales mais également de celui des IgA et des IgM, affaiblissant ainsi considérablement les défenses immunitaires du patient chez qui l'épuration plasmatique a été réalisée. De plus, ce support présente une stabilité insuffisante qui peut conduire, lors de son utilisation, à une désorption progressive de la protéine A. Celle-ci se retrouve alors entraînée dans la circulation sanguine du patient subissant l'épuration plasmatique qui provoque une activation néfaste du système du complément.

Cette technique est extrêmement coûteuse compte tenu du prix de revient de ce type de colonnes et ne protège pas d'une éventuelle contamination virale via la protéine A.

Plus récemment, il a également été proposé, notamment dans la demande de brevet FR-A-2 582 815, un procédé de séparation des anticorps anti-FVIII au moyen de colonnes d'adsorption constituées de supports à base de polymères (polyesters cellulosiques, polyéthers cellulosiques, polystyrène (PS), polyisoprène ou polybutadiène) fonctionnalisés par des fonctions sulfonates et chlorosulfonyles portant des résidus d'acides aminés tels que par exemple l'acide glutamique, l'hydroxyproline, la thréonine, l'alanine ou la phénylalanine.

C'est ainsi que dans l'article de C. Boisson-Vidal *et al*., J. Mat. Sc., 1991, 2, 193-196, il est proposé des résines à base de polystyrène, substituées à 18, 24 ou 65% par l'ester diméthylique de l'acide glutamique ou à 8, 16 ou 35% par l'α-hydroxyproline. Les meilleurs résultats ont été obtenus avec la résine constituée par du polystyrène modifié à 24% par l'ester diméthylique de l'acide glutamique.

Cependant, de tels supports ne sont pas toujours satisfaisants du point de vue de leur spécificité d'adsorption insuffisante vis-à-vis des anticorps anti-FVIII et de leur trop faible rendement d'épuration vis à vis des anticorps anti-FVIII.

L'article de L. Dahri *et al*., J. Biomater. Sci. Edn., 1994, 8, 695-705 décrit des résines d'adsorption à base de polystyrène substitué à différents degrés par de la L-tyrosine ou par de l'ester méthylique de la L-tyrosine (de 5 à 55% environ).

Cependant la spécificité de ces résines n'est pas non plus satisfaisante car leur utilisation entraîne également l'élimination plasmatique de plus de 25% du facteur V de la coagulation (FV) dont la présence est essentielle au bon déroulement du processus de la coagulation. En outre, la présence d'impuretés (chlore) a été mise en évidence.

C'est afin de remédier à ces problèmes que, de façon surprenante, les Inventeurs ont mis au point ce qui fait l'objet de l'invention.

Ils ont en effet mis au point un nouveau procédé de préparation (synthèse, conditionnement) de résines de polystyrène fonctionnalisé contenant de 5 à 15% de fonctions sulfamide de l'ester méthylique de la L-tyrosine. Ces résines sont capables d'adsorber spécifiquement les anticorps anti-FVIII permettant ainsi leur utilisation comme immuno-adsorbants pour la fabrication de colonnes d'épuration extra-corporelle chez des sujets ayant développé ces anticorps.

La présente invention a donc pour objet des résines de polystyrène réticulé à 2-5% et fonctionnalisé par des groupements sulfonates et sulfamide de l'ester méthylique de la L-tyrosine, caractérisées en ce qu'elles répondent à la formule (I) suivante : 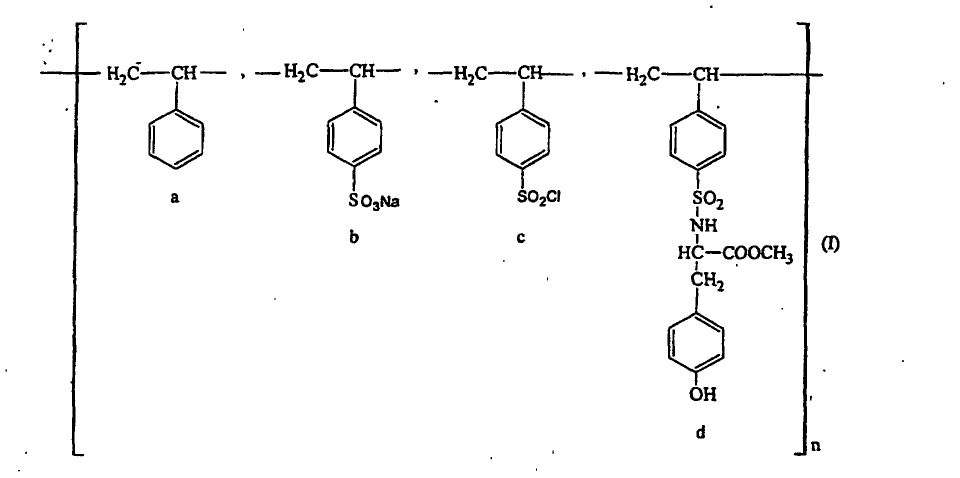 dans laquelle :
- a est compris entre 5 et 15% ;
- b est compris entre 74 et 82 % ;
- c est compris entre 0 et 5% ; et
- d est compris entre 5 et 15 %;
- n est compris entre 3 et 5000 ;
la somme a + b + c + d étant égale à 100.

Dans la description qui va suivre, et pour des raisons de commodité, les résines de formule (I) conformes à l'invention peuvent être dénommées PTyrOMe (ou BIOTYR).

Les résines de formule (I) dans lesquelles l'indice c est compris entre 0 et 2 % sont préférées, et encore plus particulièrement, on préfère celles dans lesquelles l'indice c est égal à 0%.

Selon l'invention, l'indice d est de préférence compris entre 7 et 13%.

Selon une forme de réalisation préférée de l'invention, le polystyrène est réticulé par du divinylbenzène.

Comme indiqué ci-dessus, le taux de réticulation du polystyrène est compris entre 2 et 5%. En effet l'utilisation de polystyrène présentant un taux de réticulation inférieur à 2% (de l'ordre de 1%) aboutit à des résines instables. L'utilisation de polystyrène présentant un taux de réticulation supérieur à 5% aboutit à des résines difficiles à fonctionnaliser.

Les résines de formule (I) se présentent généralement sous la forme de billes ayant un diamètre de préférence compris entre 35 et 800 µm environ à l'état sec, et encore plus préférentiellement entre 35 et 75 µm.

Les résines de formule (I) peuvent être utilisées pour la fabrication de colonnes de chromatographie, en particulier pour la fabrication de colonnes d'épuration plasmatique et sanguine. Ces colonnes sont aptes à adsorber des anticorps anti-FVIII.

L'invention a donc également pour objet des colonnes d'épuration contenant au moins une résine de formule (I) telle que définie ci-dessus, et équilibrée en tampon à un pH physiologique généralement compris entre 7,3 et 7,4 environ.

Ces colonnes peuvent faire partie d'un dispositif d'épuration d'anti-corps anti-FVIII constitué d'un circuit, fermé à circulation continue, dans lequel une ou plusieurs colonnes d'épuration telles que définies ci-dessus peuvent être installées, lesdites colonnes étant positionnées en série ou en parallèle, de façon à augmenter le rendement d'épuration en anticorps anti-FVIII, tout en diminuant éventuellement le temps d'épuration.

Ces circuits d'épuration sont de préférence équipés d'une vanne d'injection et d'une pompe assurant la circulation. Lorsque ce dispositif d'épuration est utilisé pour le traitement de prélèvements sanguins, alors il peut également être équipé d'un séparateur cellulaire assurant la séparation du plasma des éléments cellulaires constitutifs du sang avant passage de celui-ci sur la colonne conforme à l'invention.

Le circuit d'épuration est de préférence maintenu à une température égale ou proche de 37°C pendant toute la durée de l'épuration.

La présente invention a donc également pour objet l'utilisation d'une ou plusieurs résines de formule (I) telles que définies ci-dessus pour la fabrication de colonnes destinées à traiter des liquides contenant des anticorps anti-FVIII. Les liquides à traiter sont de préférence des plasmas ou des sangs totaux, et encore plus particulièrement des plasmas ou des sangs totaux de patients atteints d'hémophilie A.

Les Inventeurs ont en effet démontré que l'épuration de plasmas d'hémophiles A à l'aide de dispositifs d'épuration plasmatique comprenant au moins une colonne contenant au moins une résine de formule (I) conforme à l'invention permet d'éliminer la majorité des anticorps anti-FVIII présents dans lesdits plasmas.

De plus, après cette épuration, le taux d'IgG totales plasmatiques résiduelles et celui des facteurs de la coagulation varie dans de très faibles proportions mettant ainsi en évidence la très grande spécificité des résines de formule (I) vis-à-vis de l'adsorption des anticorps anti-FVIII.

Un autre avantage de ce dispositif d'épuration plasmatique est que le passage du plasma sur la colonne d'épuration conforme à l'invention n'entraîne pas de décomplémentation significative de celui-ci par adsorption des protéines du système du complément.

Selon l'utilisation conforme à l'invention, et lorsque l'épuration est terminée, les colonnes d'épuration comprenant au moins une résine de formule (I) telle que définie ci-dessus peuvent être régénérées par désorption de la fraction plasmatique adsorbée sur la résine, par passage sur les colonnes d'une solution saline, en général une solution de NaCl 3M. La résine est ensuite rééquilibrée à l'aide d'une solution tampon à pH physiologique (entre 7,3 et 7,4 environ). Selon une forme de réalisation particulière de l'invention, et lorsque le circuit d'épuration est équipé d'au moins deux colonnes d'épuration conformes à l'invention disposées en parallèle, l'une d'entre elles est régénérée pendant que l'autre est utilisée pour l'adsorption des anticorps anti-FVIII.

La régénération de ces colonnes d'épuration n'entraîne pas de dégradation chimique de la résine de formule (I), ce qui a pour conséquence et avantage de ne pas modifier leur spécificité vis-à-vis des anticorps anti-FVIII.

L'invention a également pour objet un procédé de préparation des résines de polystyrène fonctionnalisé de formule (I).

La préparation des résines de formule (I) se fait en deux étapes principales : la chlorosulfonation qui permet d'introduire des fonctions chlorosulfonyles sur les noyaux aromatiques du polystyrène, puis la fixation de l'ester méthylique de la L-tyrosine par l'intermédiaire des groupes chlorosulfonyles.

Selon ce procédé, et dans une première étape on effectue une réaction de chlorosulfonation consistant à faire réagir de l'acide monochlorosulfonique (HSO₃Cl) (en excès) sur des billes de polystyrène non fonctionnalisé (PS) réticulé à 2-5%, dans un rapport molaire HSO₃Cl/PS supérieur à 8, pour obtenir un polystyrène portant des fonctions parachlorosulfoniques (PSSO₂Cl), puis dans une deuxième étape à estérifier les fonctions parachlorosulfoniques (SO₂Cl) du polystyrène PSSO₂Cl ainsi obtenu, par l'ester méthylique de la L-tyrosine (TyrOMe) sous la forme de chlorhydrate préalablement dissout dans un milieu solvant organique en présence d'une amine tertiaire, le rapport molaire TyrOMe/SO₂Cl (R) étant compris entre 0,1 et 1, le rapport molaire amine tertiaire/TyrOMe (R') étant compris entre 1 et 2 et le rapport molaire amine tertiaire/SO₂Cl (R") étant compris entre 1 et 2, pour obtenir une résine de formule (I) telle que définie ci-dessus.

Ce procédé de synthèse peut être représenté, de façon simplifiée, par le schéma général A ci-après, dans lequel l'indice d a la même signification que celle indiquée ci-dessus pour les composés de formule (I).

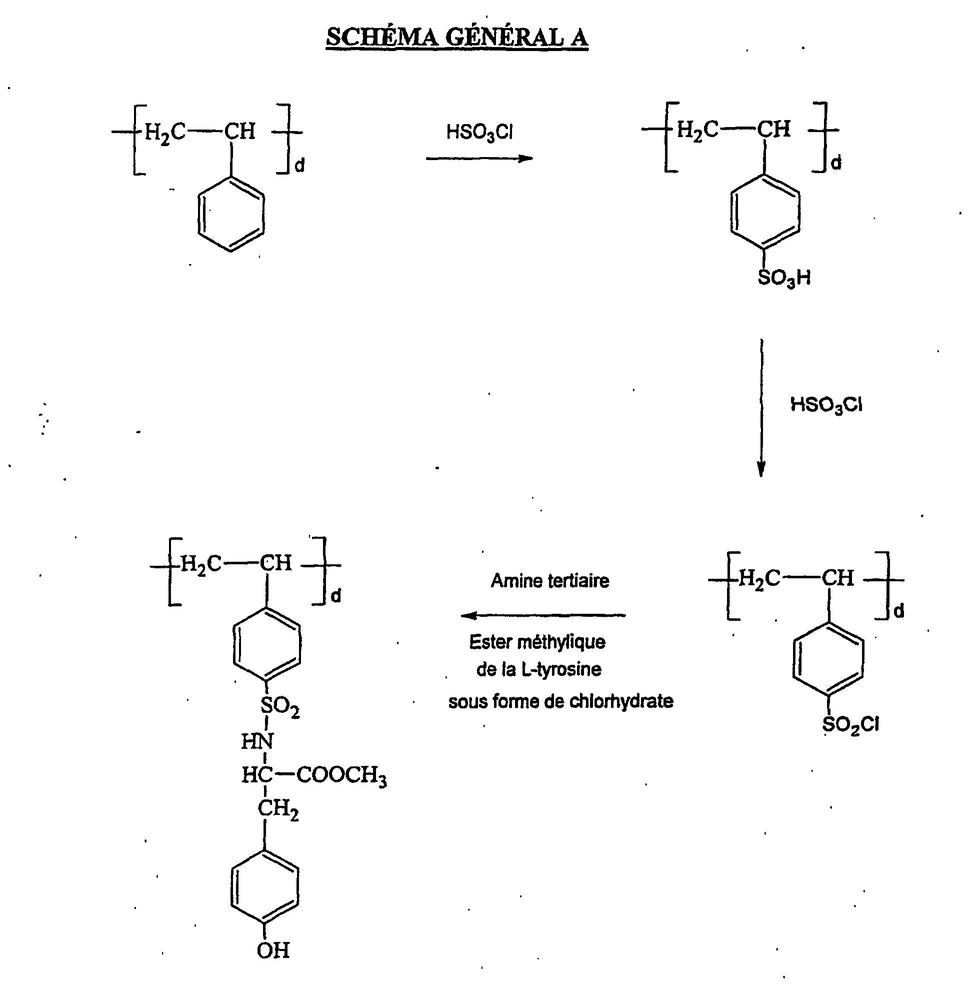

Selon une forme de réalisation préférée de ce procédé de préparation, le rapport molaire (R) est égal à 0,15, le rapport molaire (R') est égal à 2, et le rapport molaire (R") est égal à 1.

Les billes de polystyrène non fonctionnalisé réticulé utilisées lors de la première étape sont de préférence des billes de polystyrène réticulé par du divinylbenzène.

Elles sont de préférence préalablement mises à gonfler dans un milieu de solvatation du polystyrène tel que le dichlorométhane, le nitrométhane, le perchloroéthylène, le diméthylformamide, le chlorure de méthylène ou le tétrahydrofurane. Le gonflement des billes de polystyrène dans le milieu de solvatation permet d'augmenter la surface accessible afin que le réactif puisse pénétrer totalement les billes de façon à avoir un rendement important.

La réaction de chlorosulfonation de la première étape s'effectue, de préférence, après gonflement préalable du PS dans du dichlorométhane en deux sous-étapes : l'acide chlorosulfonique réagit sur le polystyrène non fonctionnalisé et conduit à la formation d'un polymère intermédiaire le poly(sulfonique)styrène, et ensuite à la formation du poly(parachlorosulfonyl)styrène.

La réaction de chlorosulfonation se fait de préférence à une température comprise entre 30 et 60°C, et encore plus particulièrement à 40°C, pendant 4 heures environ, ceci dans le but d'augmenter la vitesse de la réaction et sous agitation douce de façon à éviter le broyage des billes de polystyrène. Ces conditions permettent d'obtenir des rendements de l'ordre de 70 à 90%.

A la fin de la première étape, la résine de PSSO₂Cl est de préférence lavée d'une part avec du dichlorométhane afin d'éliminer l'acide en excès et d'autre part avec de l'acétone afin d'éliminer toutes traces d'acide restant dans le milieu et de faciliter le séchage de la résine.

Avant d'effectuer la deuxième étape, les billes de PSSO₂Cl sont de préférence séchées sous vide puis mises à gonfler dans un milieu de solvatation tel que ceux utilisés lors de la première étape et définis ci-dessus, de façon à augmenter la surface accessible au réactif utilisé lors de la deuxième étape.

Au cours de cette deuxième étape, la fixation de l'ester méthylique de la L-tyrosine se fait par condensation de la forme chlorhydrate de ce dernier sur le PSSO₂Cl dans un solvant anhydre, en présence d'une amine tertiaire telle que par exemple la triéthylamine (NEt₃). L'amine tertiaire transforme le chlorhydrate en amine libre qui réagit ensuite avec le polystyrène chlorosulfonique. Dans un deuxième temps, la solution d'acide aminé est mise en contact avec la résine PSSO₂Cl de préférence préalablement mise à gonfler. L'acide chlorhydrique généré au cours de la réaction est neutralisé par addition d'amine tertiaire telle que la NEt₃ dans le milieu réactionnel.

La détermination de la quantité de réactifs (amine tertiaire et chlorhydrate de l'ester méthylique de la L-tyrosine) à utiliser dépend du taux de fonctions SO₂Cl fixées lors de la première étape qui est déterminé par dosage argentimétrique et par analyse élémentaire.

Ce taux, exprimé en milliéquivalents par gramme de résine (meq/g), sert de base de calcul pour déterminer les quantités de réactif à utiliser.

Lors de la première étape, le rendement de chlorosulfonation est en général égal à au moins 76%, soit entre 4 et 5 meq de chlore par gramme de résine ou entre 4 et 5 mmol de fonctions SO₂Cl par gramme de résine.

Les quantités d'ester méthylique de la L-tyrosine (TyrOMe) et d'amine tertiaire (AIII) à utiliser sont calculées à partir des rapports molaires suivants :
- R = TyrOMe / PSSO₂Cl = 0,15 ;
- R' = AIII / TyrOMe =.2 ; et
- R" = TyrOMe / PSSO₂Cl = 1

Lorsque la synthèse est terminée, la résine ainsi obtenue est filtrée, lavée, de préférence avec un alcool tel que l'éthanol, puis séchée sous vide à une température comprise entre 40 et 50 °C.

Lorsque la synthèse est terminée, il est également souhaitable d'éliminer toute trace de chlore de façon à ce que l'indice c des résines de formule (I) soit le plus faible possible et de préférence égal à 0%.

Pour ce faire, la résine est de préférence lavée avec un agent alcalinisant (tel que la soude) apte à hydrolyser les fonctions parachlorosulfonyles résiduelles sans saponifier les fonctions ester méthyliques de la L-tyrosine. Au bout d'une dizaine de lavages, le taux de chlore résiduel devient négligeable.

Avant son utilisation, la résine est de préférence conditionnée par une succession de lavages et de centrifugations afin d'éliminer toute trace d'impuretés qui pourraient interagir avec les protéines plasmatiques.

Pour ce faire, une série de lavages de la résine est effectuée en utilisant différents types de solutions : chlorure de sodium, citrate de sodium, Tampon de Michaelis.

Entre chacun de ces lavages, les résines sont de préférence abondamment lavées à l'eau bidistillée.

Après chaque étape de synthèse, les résines de formule (I) conforme à l'invention sont de préférence soumises à une série de caractérisations physico-chimiques.

En particulier, l'observation microscopique des résines permet d'avoir des infonnations sur la forme et la distribution de taille des particules avant et après chaque étape de la synthèse.

La détermination du taux de substitution de chaque résine peut être effectuée par analyse élémentaire des éléments constitutifs de la résine : l'azote, le soufre, le chlore et le sodium.

Le taux de chlore des résines peut également être déterminé par dosage argentimétrique des ions chlorure libérés après hydrolyse d'un échantillon de la résine en suspension dans une solution aqueuse de soude.

Le taux d'ester méthylique de la L-tyrosine (formule (I)-indice d) peut également être déterminé par dosage acidimétrique de la fonction carboxylique libérée par hydrolyse préalable de la fonction ester par exemple par une solution aqueuse de soude.

Le taux de substitution en ester méthylique de la L-tyrosine obtenu dans les conditions de mise en oeuvre du procédé de préparation conforme à l'invention varie entre 5 et 15%, mettant en évidence la bonne reproductibilité de ce procédé de synthèse.

En fin de synthèse, les fines particules provenant des cassures éventuelles des billes de polystyrène lors des différentes étapes de la synthèse sont de préférence éliminées. Cette élimination peut être réalisée par une série de lavages et de centrifugations successifs des résines en solution tampon, de préférence à un pH compris entre 7,2 et 7,4. Ces lavages sont de préférence réalisés jusqu'à clarification totale du surnageant.

L'absence de fines particules au niveau de la résine peut être contrôlée par un test biologique, (temps de thrombine, temps de céphaline-activé, etc...).

Ces tests biologiques sont réalisés conformément aux spécificités des fabricants de réactifs.

Juste avant leur utilisation, et lorsque les résines de formule (I) ont été introduites dans la ou les colonnes d'épuration, ces dernières sont de préférence équilibrées au pH physiologique (en général 7,4) dans un tampon tel que le tampon de Michaelis, un tampon phosphate, le tampon Owen Coler, le tampon véronal.

Enfin l'invention a pour objet un procédé d'épuration *ex-vivo* des anticorps anti-FVIII présents dans un liquide, caractérisé par le fait qu'il consiste :
a) à mettre en contact ledit liquide avec au moins une colonne d'épuration contenant au moins une résine de formule (I) telle que définie ci-dessus, et
b) à séparer ensuite ledit liquide de ladite résine de formule (I) sur laquelle ont été adsorbés les anticorps anti-FVIII.

Selon une forme de réalisation préférée de ce procédé d'épuration, ledit liquide est du plasma sanguin ou du sang total, et encore plus particulièrement du plasma sanguin ou du sang total de patients atteints d'hémophilie A.

Outre les dispositions qui précèdent, l'invention comprend encore d'autres dispositions qui ressortiront de la description qui va suivre, laquelle se réfère à des exemples de synthèse de résines fonctionnalisées de formule (I) selon l'invention, à un exemple comparatif de l'adsorption des facteurs de la coagulation sur une résine de formule (I) et une résine protéine A-Sépharose ®, à un exemple de démonstration de la spécificité d'adsorption d'une résine de formule (I) vis-à-vis des anticorps anti-FVIII, à des études de l'adsorption des facteurs de la coagulation sur deux colonnes contenant au moins une résine de formule (I) montées en série ou en parallèle et à un exemple d'étude de l'adsorption d'une protéine du complément par une résine de formule (I).

Il doit être bien entendu toutefois que ces exemples sont donnés uniquement à titre d'illustration de l'objet de l'invention, dont ils ne constituent en aucune manière une limitation.

### EXEMPLE 1 : PRÉPARATION D'UNE RÉSINE DE FORMULE (I) (BIOTYR 4)

### 1) Étape de préparation à la synthèse

100 g de billes de polystyrène réticulé à 3%, vendues sous la dénomination Bio-Beads S-X3 ® (200-400 mesh) par la société Bio-Rad sont mises en suspension dans 800 ml de CH₂Cl₂. L'ensemble est agité doucement pendant 1 heure à température ambiante. La suspension est ensuite filtrée et lavée avec 800 ml de CH₂Cl₂. La résine est finalement mise en suspension dans 400 ml de CH₂Cl₂.

### 2) Étape de chlorosulfonation du polystyrène (obtention d'un PSSO2Cl)

Un mélange constitué de 650 ml de CH₂Cl₂ et de 550 ml de HSO₃Cl est versé très lentement sur la résine en suspension dans le CH₂Cl₂. Le tout est porté au reflux à 40°C sous agitation douce pendant 4 heures. La résine est alors filtrée puis lavée 3 fois avec 1 litre de CH₂Cl₂. Les lavages de la résine se poursuivent avec 3 fois 1 litre d'acétone, puis celle-ci est filtrée. Finalement, la résine PSSO₂Cl est récupérée, pesée et mise à sécher sous vide à 40°C.

### 3) Caractérisation de la résine PSSO2Cl

Des échantillons de la résine PSSO₂Cl obtenue ci-dessus à l'étape 2) sont prélevés afin de déterminer le taux de chlore de cette résine. Cette analyse est effectuée par dosage argentimétrique, comme suit : 100 g de résine PSSO₂Cl sont hydrolysés à l'aide de 75 ml d'une solution de soude 2 M. Le mélange est maintenu sous agitation douce pendant 3 heures au reflux, à une température comprise entre 90 et 100°C. La résine PSSO₂Cl ainsi hydrolysée est filtrée et rincée avec de l'eau distillée. Le filtrat est ensuite acidifié à un pH compris entre 3 et 4 par addition d'acide nitrique 1 M. La solution est ensuite dosée par une solution de nitrate d'argent 0,1 M de façon à déterminer le taux de chlore. Une analyse microscopique des billes de PSSO₂Cl et une analyse élémentaire sont également effectuées.

La résine PSSO₂Cl présentait les caractéristiques suivantes :

| **Méthodes** | **Résultats** | | | | |
|---|---|---|---|---|---|
| Analyse microscopique | Les billes présentaient une forme sphérique et une distribution de taille hétérogène conformes à celles des billes d'origine. | | | | |
| Dosage argentimétrique | **Chlore (meq/I)** | | | **% SO**_{**2**}**Cl** | |
| | 5,0 | | | 77,6 | |
| Analyse élémentaire | **Cl** | **S** | **PS** | **SO**_{**3**}**H** | **SO**_{**2**}**Cl** |
| | 4,0 meq/g | 4,7 meq/g | 10% | 14% | 76% |

### 4) Etape de fixation de l'ester méthylique de la L-tyrosine (Exemple de la résine BIOTYR 4)

100 g de résine PSSO₂Cl obtenue ci-dessus à l'étape 2) sont mis à gonfler dans 500 ml de CH₂Cl₂ pendant 30 mn à température ambiante.

15 g de TyrOMe sont dissous dans 1 litre de CH₂Cl₂ à 40°C au reflux et par addition progressive de 18 ml de NEt₃ en 1 heure.

Les deux mélanges sont ensuite réunis. 60 ml de NEt₃ sont alors ajoutés doucement au mélange. L'ensemble du milieu réactionnel est porté au reflux à 40°C pendant 2 heures, sous agitation douce.

La résine est ensuite filtrée, lavée avec 6 litres d'éthanol puis avec 15 litres d'une solution aqueuse de soude 10⁻² M.

Finalement, la résine BIOTYR 4 est récupérée, pesée et mise à sécher dans une étuve sous vide à 40°C.

### 5) Etape de la caractérisation de la fixation de l'ester méthylique de la L-tyrosine

200 mg de résine BIOTYR 4 obtenue ci-dessus à l'étape IV) sont hydrolysés avec 100 ml d'une solution de soude 2 M, à 50°C pendant 24 heures. La résine est ensuite filtrée, lavée à l'eau distillée et séchée à l'étuve.

190 mg de résine BIOTYR 4 ainsi hydrolysée sont mis en suspension dans 70 ml d'eau distillée et dosés par une solution titrante de soude à 0,1 M sur un banc de titration. Une analyse microscopique et une analyse élémentaire sont également réalisées.

La résine BIOTYR 4 présentait les caractéristiques suivantes :

| **Méthodes** | **Résultats** | | | | | | |
|---|---|---|---|---|---|---|---|
| Analyse microscopique | Les billes présentaient une forme sphérique et une distribution de taille hétérogène conformes à celles des billes d'origine. | | | | | | |
| Dosage acide-base | **COOH (meq/g)** | | | **PS** | | **SO**_{**3**}**Na** | **TyrOMe** |
| | 4,8 | | | 10% | | 81% | **9%** |
| Analyse élémentaire | **Cl** | **N** | **S** | **PS** | **PSSO**_{**2**}**Cl** | **TyrOMe** | **SO**_{**3**}**Na** |
| | 0,2 | 0,5 | 4,0 | 10% | 0% | 11% | 79% |

### EXEMPLE 2 : PRÉPARATION DE RÉSINES DE FORMULE (I)

De la même façon que décrit ci-dessus à l'exemple 1, des résines de formule (I) conformes à l'invention (BIOTYR 1 à BIOTYR 3 et BIOTYR 5 à BIOTYR 8) ont été préparées. Leurs caractéristiques figurent dans le Tableau I ci-après :

**Tableau I**

| **Résines** | **PS (%)** | **SO**_{**2**}**Cl (%)** | **SO**_{**3**}**Na (%)** | **TyrOMe (%)** |
|---|---|---|---|---|
| **BIOTYR 1** | 10 | 1 | 77 | 12 |
| **BIOTYR 2** | 10 | 5 | 74 | 11 |
| **BIOTYR 3** | 7,5 | 4 | 78,5 | 10 |
| **BIOTYR 5** | 8 | 0 | 82 | 10 |
| **BIOTYR 6** | 7,5 | 2 | 78 | 12,5 |
| **BIOTYR 7** | 9 | 2 | 78 | 11 |
| **BIOTYR 8** | 7,5 | 2 | 78 | 12,5 |

### EXEMPLE 3 : ÉTUDE COMPARATIVE DE L'ADSORPTION DES FACTEURS DE LA COAGULATION SUR LES RÉSINES BIOTYR 1 ET PROTÉINE A-SEPHAROSE ®

### 1) Protocole type

Les caractéristiques du dispositif d'épuration utilisé sont les suivantes :
- Colonnes utilisées : Colonnes Bio Rad ® de 4 cm de hauteur, 0,7 cm de diamètre, remplies soit avec 1,7 ml d'une suspension de 0,480 g de résine BIOTYR 1 telle que décrite dans le Tableau I ci-dessus pour 1 ml de tampon véronal, soit avec 1 ml d'un gel de Protéine A-Sépharose ® à 0,270 g pour 1 ml de tampon véronal. Les colonnes sont équilibrées en tampon véronal pH 7,36.
- Débit : 0,1 ml/mn en circulation fermée continue
- Température : 37°C
- Plasma utilisé : 6 ml de plasma normal pauvre en plaquettes (PPP) prélevé dans l'heure et mis en circulation fermée dans le dispositif pendant 90 mn. Plusieurs plasmas ont été examinés pour toutes les expériences réalisées. Des prélèvements sont effectués aux temps suivants :
   - T0 : avant contact avec les résines,
   - T1 : après 15 minutes de contact,
   - T2 : après 30 minutes de contact,
   - T3 : après 45 minutes de contact,
   - T4 : après 60minutes de contact,
   - T5 : après 90 minutes de contact.

Le même plasma a également été maintenu à 37°C et laissé sur la paillasse sans être mis en contact avec les résines et a subi les mêmes prélèvements afin de servir de témoin (Témoin 1).

Le même plasma a également été mis en circulation à 37°C au travers d'une colonne Bio Rad ® ne contenant pas de résine et a subi les mêmes prélèvements afin de déterminer la stabilité des différents facteurs étudiés dans le système utilisé (Témoin 2).

Ces prélèvements permettent de faire une cinétique d'adsorption des différents facteurs étudiés.

### 2) Dosage des protéines plasmatiques

### 2.1) Mesure de l'activité anti-FVIII

Le principe de ce dosage (Kasper *et al*., Thromb. Diath. Haemorr., 1975, 34, 869-872) est la mesure de l'activité coagulante du FVIII résiduel après incubation d'un mélange à volume égal, d'un pool de plasmas de référence (PR) contenant 100 % de tous les facteurs de la coagulation dont le FVIII (commercialisé par la société DADE-Behring, France) et de plasma à tester, pendant 2 heures à 37°C.

Si l'anomalie du plasma à tester est causée par un facteur déficient, elle sera corrigée en présence de plasma normal. Si l'anomalie est secondaire à la présence d'un inhibiteur, elle ne sera pas rectifiée par la présence du plasma normal. Le taux d'anticorps anti-FVIII est déterminé selon le principe de ce dosage. Le titre en anticorps anti-FVIII est défini en Unités Bethesda (UB) par ml de plasma. 1 UB correspond à la concentration d'anticorps capable d'inhiber 50% du facteur VIII dans 1 ml de plasma sain après 2 heures d'incubation à 37°C.

### 2.2) Dosage des IgG totales

Ce dosage est réalisé par immuno-diffusion radiale (IDR) ou par ELISA (Enzyme Linked Immuno-sorbent Assay).

### 2.2.1) Dosage par IDR

Le plasma à tester est déposé dans un puits (5µl) pratiqué dans un gel d'agarose (plaques NOR PARTIGEN ® IgG HC, Berhing) auquel est incorporé un antisérum spécifique dirigé contre la chaîne γ des IgG humaines. Selon la méthodologie classique, après 2 jours de diffusion, le diamètre des anneaux de précipitation est mesuré à 0,1 mm près, à l'aide d'une loupe graduée. Le carré du diamètre de l'anneau de précipitation est proportionnel à la concentration en antigène(IgG à doser), le résultat est exprimé en mg/ml ou en g/l.

### 2.2.2) Dosage par ELISA

Selon le protocole classique ELISA, des puits de plaques de microtitration sont couplés avec 100 µl d'anticorps anti-IgG humaines à 5µg/ml (SIGMA). Après saturation avec une solution de gélatine de poisson, les IgG à doser sont mises à incuber pendant 2 heures à température ambiante. Les IgG à doser sont révélées par action d'anti-IgG biotinylés (SIGMA), après 2 heures d'incubation à température ambiante. 100 µl d'une solution de Streptavidine-peroxydase (SIGMA) sont ensuite ajoutés pendant 15 minutes à 37°C.

La révélation se fait avec un substrat tétraméthylbenzidine dichlorhydrate (TMB) en présence de peroxyde d'hydrogène (H₂O₂). La réaction est arrêtée au bout de 5 minutes, par addition de 100 µl d'une solution d'acide sulfurique 2 M. La lecture de la densité optique (D.O.) se fait à 450 nm avec un lecteur de plaques automatique.

Une gamme étalon est établie dans les mêmes conditions à l'aide d'une solution d'IgG étalon (Bio-Rad).

### 2.3) Dosage des facteurs de la coagulation

Les dosages des facteurs de la coagulation (FII, FV, FVII + X) et du fibrinogène sont classiquement réalisés par dosages chronométriques ou amidolytiques par addition d'un substrat chromogénique.

### 3) Résultats

### 3.1) Stabilité des facteurs de la coagulation (FII, FV et FVII + X), du fibrinogène et des IgG totales mis en circulation à 37°C sans contact avec la résine.

L'analyse des résultats des témoins 1 et 2 montre que les conditions expérimentales utilisées n'induisent pas de perte d'activité des différents facteurs de la coagulation étudiés, à l'exception du facteur V pour lequel une légère inactivation est observée, de l'ordre de 20% après 90 mn, qui confirme la très grande fragilité de ce facteur.

### 3.2) Comparaison de l'adsorption des IgG totales sur les résines BIOTYR 1 et Protéine A-Sépharose ®.

Les résultats sont présentés dans les Tableaux II et III ci-après :

**Tableau II**

| **Résine BIOTYR 1** | | | | |
|---|---|---|---|---|
| **Type de plasma** | **Temps en mn** | **% d'IgG adsorbé** | **mg d'IgG adsorbées/mg de résine** | **IgG (mg) restant dans le milieu** |
| Élution de 6 ml de PPP ayant un taux en IgG de 7,5 g/l | 0 | 0 | 0 | 45 |
| | 15 | 0 | 0 | 45 |
| | 30 | 0 | 0 | 45 |
| | 45 | 0 | 0 | 45 |
| | 60 | 0 | 0 | 45 |
| | 90 | **23,3** | **22** | **34,5** |

| **Type de plasma** | **Temps en mn** | **% d'IgG adsorbé** | **mg d'IgG adsorbées/mg de résine** | **IgG (mg) restant dans le milieu** |
|---|---|---|---|---|
| Élution de 6 ml de PPP ayant un taux en IgG de 12 g/l | 0 | 0 | 0 | 72 |
| | 15 | 0 | 0 | 72 |
| | 30 | 0 | 0 | 72 |
| | 45 | 0 | 0 | 72 |
| | 60 | 20,83 | 31,2 | 57 |
| | 90 | **20,8** | **31,2** | **57** |

**Tableau III**

| **Résine Protéine A-Sépharose** ® | | | | |
|---|---|---|---|---|
| **Type de plasma** | **Temps en mn** | **% d'IgG adsorbé** | **mg d'IgG adsorbées/mg de résine** | **IgG (mg) restant dans le milieu** |
| Élution de 6 ml de PPP ayant un taux en IgG de 15,6 g/l | 0 | 0 | 0 | 93,7 |
| | 15 | 0 | 0 | 93,7 |
| | 30 | 20 | 69,3 | 75 |
| | 45 | 20 | 69,3 | 75 |
| | 60 | 38,4 | 133,3 | 57,7 |
| | 90 | **61,5** | **213,3** | **36,1** |

| **Type de plasma** | **Temps en mn** | **% d'IgG adsorbé** | **mg d'IgG adsorbées/mg de résine** | **IgG (mg) restant dans le milieu** |
|---|---|---|---|---|
| Élution de 6 ml de PPP ayant un taux en IgG de 11,3 g/l | 0 | 0 | 0 | 67,9 |
| | 15 | 0 | 0 | 67,9 |
| | 30 | 0 | 0 | 67,9 |
| | 45 | 15 | 37,8 | 57,7 |
| | 60 | 38,2 | 96 | 42 |
| | 90 | **59,2** | **148,9** | 27,7 |

Ces résultats montrent que les pourcentages d'IgG adsorbés sur la résine BIOTYR 1 sont nettement inférieurs aux pourcentages d'IgG adsorbés sur la résine Protéine A-Sépharose ®, après 90 mn de contact.

Les résines de formule (I) conformes à l'invention, permettent donc d'adsorber beaucoup moins d'IgG circulantes que les résines de type Protéine A-Sépharose ® de l'art antérieur, préservant ainsi nettement plus les défenses immunitaires du patient chez qui l'épuration plasmatique est effectuée.

### 3.3) Comparaison de l'adsorption des facteurs FII, FV, FVII + X et du fibrinogène sur les résines BIOTYR 1 et Protéine A-Sépharose ®.

Les résultats obtenus après élution de 6 ml de PPP (différents lots) sont présentés dans le Tableau IV ci-après :

**Tableau IV**

| **Temps (mn)** | **% FII adsorbé** | | **% FV adsorbé** | | **% FVII + X adsorbé** | | **% fibrinogène adsorbé** | |
|---|---|---|---|---|---|---|---|---|
| | BIOTYR 1 | Protéine A-Sépharose ® | BIOTYR 1 | Protéine A-Sépharose ® | BIOTYR 1 | Protéine A-Sépharose ® | BIOTYR 1 | Protéine A-Sépharose ® |
| 0 | 0 | 0 | 0 | 0 | 0 | 4,8 | 0 | 0 |
| 15 | 8 | 2,1 | 0 | 1,5 | 0 | 0 | 0,7 | 4,6 |
| 30 | 10 | 2,4 | 2,8 | 7,7 | 0 | **7,9** | 0,8 | 5,8 |
| 45 | 7,1 | 4,5 | 1,9 | 0 | 0,9 | **11,9** | 0 | 6,1 |
| 60 | 8,1 | 0 | 3,8 | 0,1 | 3,9 | 4,0 | 0,1 | 0 |
| 90 | 2,0 | 3,3 | 0 | 0,3 | 0,9 | 2,4 | 0,9 | **11,9** |

| **Temps (mn)** | % **FII adsorbé** | | **% FV adsorbé** | | **% FVII + X adsorbé** | | **% fibrinogène adsorbé** | |
|---|---|---|---|---|---|---|---|---|
| | BIOTYR 1 | Protéine A-Sépharose ® | BIOTYR 1 | Protéine A-Sépharose ® | BIOTYR 1 | Protéine A-Sépharose ® | BIOTYR 1 | Protéine A-Sépharose ® |
| 0 | 0 | 0 | 0 | 0 | 0 | 0 | 0 | 0 |
| 15 | 0 | 9,1 | 3,8 | 6,4 | 0 | 0 8 | 8 | 3,2 |
| 30 | 0 | 9,6 | 5,4 | 11,5 | 0 | 2,9 | 1,1 | 0 |
| 45 | 0 | 13,7 | 3,6 | 9 | 0 | 0 | 10,2 | **11,4** |
| 60 | 5,6 | 11,2 | 7,2 | 9 | 4,2 | 2,9 | 3,2 | **6,6** |
| 90 | 1,8 | **1,8** | **14,4** | 0 | 3,1 | 4,7 | **6,8** | **9,8** |

Ces résultats montrent que l'adsorption de ces différents facteurs de la coagulation est très faible sur les deux types de résine, même dans le cas du facteur V pour lequel l'inactivation n'est pas plus élevée que celle constatée avec les témoins 1 et 2.

### EXEMPLE 4 : MISE EN ÉVIDENCE DE LA SPÉCIFICITÉ D'ADSORPTION D'UNE RÉSINE DE FORMULE (I) VIS-A-VIS DES ANTICORPS ANTI-FVIII

### 1) Dispositif d'épuration plasmatique

Les conditions expérimentales retenues pour cette étude sont proches de celles utilisées au cours des épurations thérapeutiques. Les caractéristiques du dispositif utilisé sont les suivantes :
- Colonne utilisée : Colonne Bio Rad ® de 4 cm de hauteur, 1 cm de diamètre, remplies avec 4 ml d'une suspension de 0,480 g de résine BIOTYR 4 telle que préparée à l'exemple 1 ci-dessus pour 1 ml de tampon véronal. La colonne a été équilibrée en tampon véronal pH 7,36.
- Débit : 1 ml/mn en circulation fermée continue
- Température : 37°C
- Plasma utilisé : 8 ml de plasma pauvre en plaquettes (PPP) d'hémophile A sévère contenant des anticorps anti-FVIII (HAS I⁺) de titre égal à 1000 UB/ml.

Des prélèvements sont été effectués aux temps suivants :
- T0 : avant contact avec les résines,
- T1 : après 30 minutes.de contact,
- T2 : après 60 minutes de contact,
- T3 : après 90 minutes de contact.

Trois séries d'expériences sont réalisées :
- Adsorption des anticorps anti-FVIII pendant 90 mn sur une colonne,
- Adsorption des anticorps anti-FVIII sur une première colonne pendant 90 mn, puis sur une seconde colonne montée en parallèle, pendant 90 mn de nouveau,
- Même expérience que celle décrite précédemment (2 colonnes montées en parallèle). 2 cycles sont effectués sur chacune des colonnes après régénération successive de la colonne non utilisée à l'aide de 25 ml d'acide citrique à pH 2,2 et reconditionnement de la colonne avant sa réutilisation.

### 2) Résultats

Les résultats sont présentés dans les Tableaux V, VI et VII ci-après.

Le Tableau V donne les résultats obtenus après passage de 8 ml de plasmas HAS sur une colonne remplie de résine BIOTYR 4 pendant 90 mn.

Le Tableau VI donne les résultats obtenus après passage de 8 ml d'un plasma HAS I⁺ sur 2 colonnes comme décrit précédemment.

Le Tableau VII présente les résultats obtenus après régénération des colonnes selon le procédé décrit ci-dessus, 20 ml d'un plasma HAS I⁺ (1000 UB/ml) étant épurés sur les deux colonnes.

**Tableau V**

| **Temps en mn** | **Anticorps Anti-FVIII adsorbés (en UB)** | **Anticorps Anti-FVIII adsorbés (en UB/g de résine)** | **% d'anticorps anti- FVIII adsorbés** |
|---|---|---|---|
| 0 | 0 | 0 | 0 |
| 30 | 920 | 479,2 | 11,5 |
| 60 | 1600 | 833,3 | 20 |
| 90 | 3360 | 1750 | 42 |

Ces résultats montrent que 42 % des anticorps anti-FVIII sont retenus sur la colonne.

**Tableau VI**

| **Colonnes** | **Temps (mn)** ^{**a**} | **Anticorps anti-FVIII restant dans le milieu (en UB)** | **% d'anticorps anti-FVIII adsorbés (rendement cumulé)** | **Anticorps anti-FVIII adsorbés (en UB/g de résine)** ^{**b**} | **Anticorps anti-FVIII adsorbés (en UB)** ^{**c**} |
|---|---|---|---|---|---|
| **1**^{**ère**} **colonne** | **0** | 8000 | 0 | 0 | 0 |
| | **30** | 6400 | 20 | 833 | 1600 |
| | **60** | 6280 | 21,5 | 896 | 1720 |
| | **90** | 5480 | 31,5 | **1313** | 2520 |
| **2**^{**ème**} **colonne** | **120** | 4800 | 40 | 354 | 3200 |
| | **150** | 4640 | 42 | 438 | 3360 |
| | **180** | 3392 | 57,6 | **1088** | 4608 |

| | | | | | |
|---|---|---|---|---|---|
| ^{a} : temps total de l'épuration simulée | | | | | |
| ^{b} : capacité d'adsorption de chaque colonne | | | | | |
| ^{c} : Anticorps anti-FVIII adsorbés totaux | | | | | |

Ces résultats montrent qu'environ 60% des anticorps anti-FVIII sont retenus après passage successif sur les deux colonnes. Chaque colonne présente une capacité d'adsorption équivalente, de l'ordre de 1312 et 1087 UB/g de résine sèche, après 90 mn de contact avec le plasma.

**Tableau VII**

| **Temps (mn)** | **0** | **60 (colonne 1)** | **120 (colonne 2)** | **180** ^{**d**} **(colonne 1)** | **240** ^{**d**} **(colonne 2)** |
|---|---|---|---|---|---|
| **Anticorps anti- FVIII adsorbés (en UB/g de résine)** | 0 | 4427 | 2297 | 776 | 938 |
| **Anticorps anti- FVIII adsorbés (en UB)** | 0 | 8500 | 4411 | 1489 | 1800 |
| **Anticorps anti- FVIII initiale dans le milieu (en UB)** | 20000 | 20000 | 11500 | 7089 | 5600 |
| **Anticorps anti- FVIII restant dans le milieu (en UB)** | 20000 | 11500 | 7089 | 5600 | 3800 |
| **% d'anticorps anti-FVIII adsorbés (rendement cumulé)** | 0 | 42,5 | 64,6 | 72 | 81 |
| **Rendement de chaque étape (en % adsorbé)** | 0 | 42,5 | 384 | 21 | 32,1 |

| | | | | | |
|---|---|---|---|---|---|
| ^{d} : résine passivée puisque déjà régénérée. | | | | | |

Ces résultats montrent qu'après 60 minutes de passage sur la première colonne, 42% environ des anticorps anti-FVIII sont retenus. Pendant la régénération de la colonne 1, le plasma est épuré sur la colonne 2 et environ 64 % des anticorps anti-FVIII totaux sont retenus. Le passage du plasma sur la colonne 1 régénérée conduit à 72% de rétention des anticorps anti-FVIII. Enfin, un dernier passage sur la colonne 2 régénérée, aboutit une déplétion d'environ 80% du plasma en anticorps anti-FVIII.

### EXEMPLE 5 : ÉTUDE DE L'ADSORPTION D'UNE PROTÉINE DU COMPLÉMENT PAR LA RÉSINE BIOTYR 1

Le choix de l'étude s'est porté sur la protéine C3, un des composants précoces et centraux du système du complément. C'est une protéine soluble de concentration sérique normale important, de l'ordre de 1,0 à 1,3 g/l. Une des conséquences de l'activation de C3 est sa conversion en C3_{c}. Cette activation peut être réalisée en recalcifiant le sérum ou le plasma et en ajoutant de l'inuline qui est un activateur donnant lieu à la formation de C3_{c}.

### 1) Plasma utilisé

6 ml d'un PPP normal sont mis en circulation sur une colonne d'épuration contenant 1 ml d'une suspension de 0,48 g de résine BIOTYR 1.

Le dosage de la protéine C3_{c} a été effectué de manière indirecte sur dés échantillons prélevés aux différents temps suivant :
- T0 : PPP avant passage sur la colonne,
- T1 : PPP après 15 mn de contact avec BIOTYR 1,
- T2 : PPP après 30 mn de contact avec BIOTYR 1,
- T3 : PPP après 45 mn de contact avec BIOTYR 1,
- T4 : PPP après 60 mn de contact avec BIOTYR 1,

Un échantillon sérologique de même donneur a été préparé et dosé en C3_{c} (Témoins S, dans passage sur la colonne d'épuration).

### 2) Dosage de la protéine C3

Ce dosage a été réalisé de manière indirecte, c'est-à-dire après activation de la protéine C3 en C3_{c} par action de l'inuline. L'activation par l'inuline nécessite une préincubation de l'échantillon à tester pendant 5 heures à 37°C en présence d'inuline à raison de 2 g/l de plasma.

Le dosage de la protéine C3_{c} a ensuite été effectué classiquement sur sérum par IDR, technique décrite ci-dessus pour le dosage des IgG totales, en utilisant un anti-sérum spécifique dirigé contre la protéine C3_{c} sur plaques NOR-PARTIGEN ®.

### 3) Résultats

Les résultats obtenus figurent dans le Tableau VIII ci-dessous. Chaque résultat est la moyenne de deux déterminations.

**Tableau VIII**

| Échantillon | Concentration en C3_{c} (g/l) | Adsorption de C3 (%) |
|---|---|---|
| Témoin S | 1,2 | - |
| T0 | 1,2 | 0 |
| T1 | 1,2 | 0 |
| T2 | 1,0 | 18,7 |
| T3 | 1,0 | 18,7 |
| T4 | 1,0 | 18,7 |

Ces résultats montrent que la concentration de la protéine C3_{C} est la même dans le sérum et dans le plasma à T0 (1,2 g/l), ils montrent également que la concentration en protéines C3_{C} diminue de 1,2 g/l à 1, 0 g/l après 30 mn de contact avec la résine BIOTYR 1, puis reste constante. Après 60 minutes de contact d'un plasma sain sur la résine BIOTYR 1, celui-ci est donc peu décomplémenté.

La même expérience réalisée sur un plasma HAS I⁺ après 180 minutes de contact avec la résine BIOTYR 4, met en évidence, là encore, une faible décomplémentation du plasma d'hémophile, soit de l'ordre de 12 %.

Ces taux de décomplémentation ne sont pas préjudiciables pour le patient.

En conclusion, l'ensemble de tous ces résultats montre que les résines de formule (I) conforme à l'invention permettent d'éliminer très efficacement les anticorps anti-FVIII de plasmas d'hémophiles ayant de forts taux en anticorps anti-FVIII, sans observer de décomplémentation préjudiciable et sans démunir le plasma traité d'une quantité significative d'IgG.

## Revendications

1. Résines de polystyrène réticulé à 2-5% et fonctionnalisé par des groupements sulfonates et sulfamide de l'ester méthylique de la L-tyrosine, **caractérisées en ce qu'**elles répondent à la formule (I) suivante : 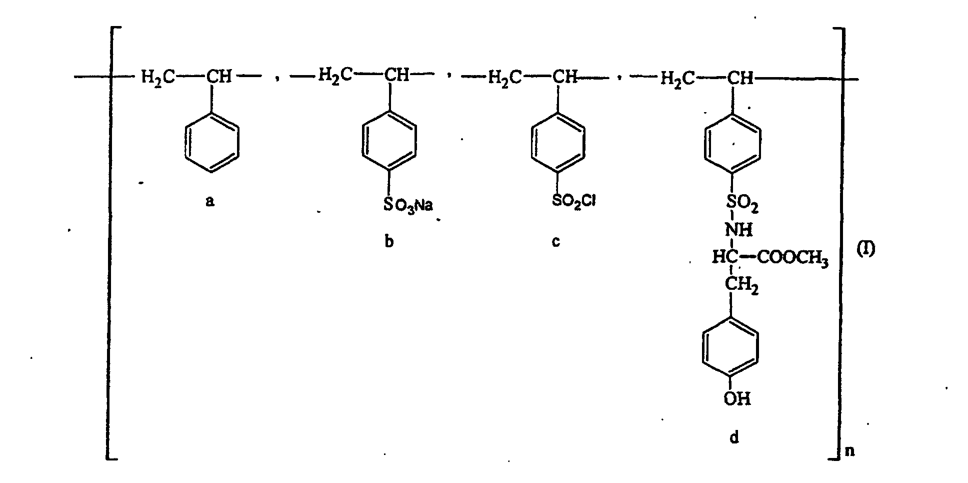 dans laquelle :
- a est compris entre 5 et 15% ;
- b est compris entre 74 et 82 % ;
- c est compris entre 0 et 5% ; et
- d est compris entre 5 et 15 %;
- n est compris entre 3 et 5000 ;
la somme a + b + c + d étant égale à 100.

2. Résines selon la revendication 1, dans lesquelles l'indice c est égal à 0%.

3. Résines selon la revendication 1 ou 2, dans lesquelles l'indice d est compris entre 7 et 13%.

4. Résines selon l'une quelconque des revendications 1 à 3, **caractérisées par le fait que** le polystyrène est réticulé par du divinylbenzène.

5. Résines selon l'une quelconque des revendications précédentes, **caractérisées par le fait qu'**elles se présentent sous la forme de billes ayant un diamètre compris entre 35 et 800 µm à l'état sec.

6. Résines selon la revendication 5, **caractérisées par le fait qu'**elles se présentent sous la forme de billes ayant un diamètre compris entre 35 et 75 µm à l'état sec.

7. Utilisation d'au moins une résine de formule (I) telle que définie à l'une quelconque des revendications 1 à 6, pour la fabrication de colonnes d'épuration plasmatique et sanguine.

8. Utilisation selon la revendication 7, **caractérisée par le fait que** les colonnes sont aptes à adsorber des anticorps anti-FVIII.

9. Utilisation selon la revendication 7 ou 8, **caractérisée par le fait que** les colonnes sont destinées à traiter des liquides contenant des anticorps anti-FVIII.

10. Utilisation selon la revendication 9, **caractérisée par le fait que** lesdits liquides sont des plasmas ou des sangs totaux de patients atteints d'hémophilie A.

11. Colonnes d'épuration contenant au moins une résine de formule (I) telle que définie à l'une quelconque des revendications 1 à 6, équilibrée en tampon à un pH physiologique.

12. Dispositif d'épuration d'anticorps anti-VIII constitué d'un circuit fermé à circulation continue comprenant une ou plusieurs colonnes d'épuration telles que définies à la revendication 11.

13. Dispositif selon la revendication 12, **caractérisé par le fait qu'**il comprend au moins deux colonnes disposées en série ou en parallèle.

14. Procédé de préparation de résines de polystyrène fonctionnalisé de formule (I) telles que définies à l'une quelconque des revendications 1 à 6, **caractérisé par le fait que** dans une première étape on effectue une réaction de chlorosulfonation consistant à faire réagir de l'acide monochlorosulfonique (HSO₃Cl) sur des billes de polystyrène non fonctionnalisé (PS) réticulé à 2-5%, dans un rapport molaire HSO₃Cl/PS supérieur à 8, pour obtenir un polystyrène portant des fonctions parachlorosulfoniques (PSSO₂Cl), puis dans une deuxième étape à estérifier les fonctions parachlorosulfoniques (SO₂Cl) du polystyrène PSSO₂Cl ainsi obtenu par l'ester méthylique de la L-tyrosine (TyrOMe) sous la forme de chlorhydrate préalablement dissout dans un milieu solvant organique en présence d'une amine tertiaire, le rapport molaire TyrOMe/SO₂Cl (R) étant compris entre 0,1 et 1, le rapport molaire amine tertiaire/TyrOMe (R') étant compris entre 1 et 2 et le rapport molaire amine tertiaire/SO₂Cl (R") étant compris ente 1 et 2, pour obtenir une résine de formule (I).

15. Procédé selon la revendication 14, **caractérisé par le fait que** le rapport molaire (R) est égal à 0,15, le rapport molaire (R') est égal à 2, et le rapport molaire (R") est égal à 1.

16. Procédé selon la revendication 14 ou 15, **caractérisé par le fait que** les billes de polystyrène non fonctionnalisé réticulé utilisées lors de la première étape sont des billes de polystyrène réticulé par du divinylbenzène.

17. Procédé selon l'un quelconque des revendications 14 à 16, **caractérisé par le fait que** la réaction de chlorosulfonation est effectuée à une température comprise entre 30 et 60°C.

18. Procédé selon l'une quelconque des revendications 14 à 17, **caractérisé par le fait que** lorsque la synthèse est terminée, la résine de formule (I) est lavée avec un agent alcalinisant apte à hydrolyser les fonctions parachlorosulfonyles résiduelles sans saponifier les fonctions esterméthyliques de la L-tyrosine.

19. Procédé d'épuration *ex-vivo* des anticorps anti-FVIII présents dans un liquide, **caractérisé par le fait qu'**il consiste :
a) à mettre en contact ledit liquide avec au moins une colonne d'épuration contenant au moins une résine de formule (I) telle que définie à l'une quelconque des revendications 1 à 6, et
b) à séparer ensuite ledit liquide de ladite résine de formule (I) sur laquelle ont été adsorbés les anticorps anti-FVIII.

20. Procédé d'épuration selon la revendication 19, **caractérisé par le fait que** ledit liquide est du plasma sanguin ou du sang total.

21. Procédé d'épuration selon la revendication 20, **caractérisé par le fait que** le plasma sanguin ou le sang total sont respectivement du plasma sanguin ou du sang total de patients atteints d'hémophilie A.

## Patentansprüche

1. Harze aus zu 2-5 % vernetztem und mit Sulfonat- und L-Tyrosinmethylestersulfamidgruppen funktionalisiertem Polystyrol, **dadurch gekennzeichnet, dass** sie die folgende Formel (I) aufweisen: 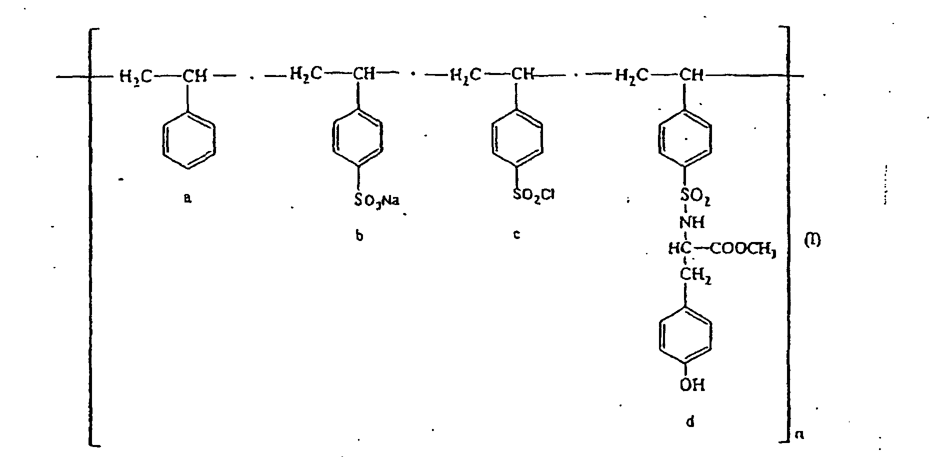 worin:
- a zwischen 5 und 15 % liegt;
- b zwischen 74 und 82 % liegt;
- c zwischen 0 und 5 % liegt; und
- d zwischen 5 und 15 % liegt;
- n zwischen 3 und 5000 liegt;
wobei die Summe von a + b + c + d gleich 100 ist.

2. Harze nach Anspruch 1, wobei die Indexzahl c 0 % ist.

3. Harze nach Anspruch 1 oder 2, wobei die Indexzahl d zwischen 7 und 13 % liegt.

4. Harze nach irgendeinem der Ansprüche 1 bis 3, **dadurch gekennzeichnet, dass** das Polystyrol durch Divinylbenzol vernetzt ist.

5. Harze nach irgendeinem der vorhergehenden Ansprüche, **dadurch gekennzeichnet, dass** sie in Form von Kügelchen mit einem Durchmesser zwischen 35 und 800 µm im Trockenzustand vorliegen.

6. Harze nach Anspruch 5, **dadurch gekennzeichnet, dass** sie in Form von Kügelchen mit einem Durchmesser zwischen 35 und 75 µm im Trockenzustand vorliegen.

7. Verwendung von wenigstens einem Harz der Formel (I) gemäß irgendeinem der Ansprüche 1 bis 6 zur Herstellung von Säulen zur Plasma- und Blutreinigung.

8. Verwendung nach Anspruch 7, **dadurch gekennzeichnet, dass** die Säulen fähig sind, Anti-FVIII-Antikörper zu adsorbieren.

9. Verwendung nach Anspruch 7 oder 8, **dadurch gekennzeichnet, dass** die Säulen zur Behandlung von Flüssigkeiten vorgesehen sind, die Anti-FVIII-Antikörper enthalten.

10. Verwendung nach Anspruch 9, **dadurch gekennzeichnet, dass** diese Flüssigkeiten Plasmen oder Vollblut von Patienten sind, die an Hämophilie A leiden.

11. Reinigungssäulen, die wenigstens ein Harz der Formel (I) gemäß irgendeinem der Ansprüche 1 bis 6 enthalten, äquilibriert mit Puffer bei einem physiologischen pH.

12. Reinigungsvorrichtung für Anti-VIII-Antikörper, die aus einem geschlossenen Kreislauf mit kontinuierlichem Umlauf besteht, umfassend ein oder mehrere Reinigungssäulen gemäß Anspruch 11.

13. Vorrichtung nach Anspruch 12, **dadurch gekennzeichnet, dass** sie wenigstens zwei in Reihe oder parallel geschaltete Säulen umfasst.

14. Verfahren zur Herstellung von Harzen aus funktionalisiertem Polystyrol der Formel (I) gemäß irgendeinem der Ansprüche 1 bis 6, **dadurch gekennzeichnet, dass** man in einem ersten Schritt eine Chlorsulfonierungsreaktion durchführt, die darin besteht, dass man Monochlorsulfonsäure (HSO₃Cl) mit Kügelchen aus zu 2-5 % vernetztem, nicht funktionalisiertem Polystyrol (PS) in einem Molverhältnis von HSO₃Cl/PS von über 8 reagieren lässt, um ein Polystyrol zu erhalten, das Parachlorsulfonfunktionen (PSSO₂Cl) trägt, und dann in einem zweiten Schritt die Parachlorsulfonfunktionen (SO₂Cl) des so erhaltenen Polystyrols PSSO₂Cl mit zuvor in einem organischen Lösungsmittel gelöstem L-Tyrosinmethylester (TyrOMe) in Form des Hydrochlorids in Gegenwart eines tertiären Amins verestert, wobei das Molverhältnis von TyrOMe/SO₂Cl (R) zwischen 0,1 und 1 liegt, das Molverhältnis von tertiärem Amin/TyrOMe (R') zwischen 1 und 2 liegt, und das Molverhältnis von tertiärem Amin/SO₂Cl (R") zwischen 1 und 2 liegt, um ein Harz der Formel (I) zu erhalten.

15. Verfahren nach Anspruch 14, **dadurch gekennzeichnet, dass** das Molverhältnis (R) gleich 0,15, das Molverhältnis (R') gleich 2 und das Molverhältnis (R") gleich 1 ist.

16. Verfahren nach Anspruch 14 oder 15, **dadurch gekennzeichnet, dass** Kügelchen aus vernetztem, nicht funktionalisiertem Polystyrol, die im ersten Schritt verwendet werden, Kügelchen aus mit Divinylbenzol vernetztem Polystyrol sind.

17. Verfahren nach irgendeinem der Ansprüche 14 bis 16, **dadurch gekennzeichnet, dass** die Chlorsulfonierungsreaktion bei einer Temperatur zwischen 30 und 60 °C durchgeführt wird.

18. Verfahren nach irgendeinem der Ansprüche 14 bis 17, **dadurch gekennzeichnet, dass** das Harz der Formel (I), wenn die Synthese beendet ist, mit einem Alkalinisierungsmittel gewaschen wird, das fähig ist, die restlichen Parachlorsulfonylfunktionen zu hydrolysieren, ohne die Methylesterfunktionen des L-Tyrosins zu verseifen.

19. *Ex*-*vivo*-Reinigungsverfahren für Anti-FVIII-Antikörper, die in einer Flüssigkeit vorhanden sind, **dadurch gekennzeichnet, dass** es darin besteht, dass man:
a) die Flüssigkeit mit wenigstens einer Reinigungssäule in Kontakt bringt, die wenigstens ein Harz der Formel (I) gemäß irgendeinem der Ansprüche 1 bis 6 enthält, und
b) die Flüssigkeit anschließend von dem Harz der Formel (I) abtrennt, an das die Anti-FVIII-Antikörper adsorbiert wurden.

20. Reinigungsverfahren nach Anspruch 19, **dadurch gekennzeichnet, dass** die Flüssigkeit Blutplasma oder Vollblut ist.

21. Reinigungsverfahren nach Anspruch 20, **dadurch gekennzeichnet, dass** das Blutplasma oder das Vollblut jeweils Blutplasma oder Vollblut von Patienten ist, die an Hämophilie A leiden.

## Claims

1. Polystyrene resins 2-5% cross-linked and functionalised by sulfonate and sulfamide groups of the methyl ester of L-tyrosine, **characterised in that** they comply with the following formula (I): 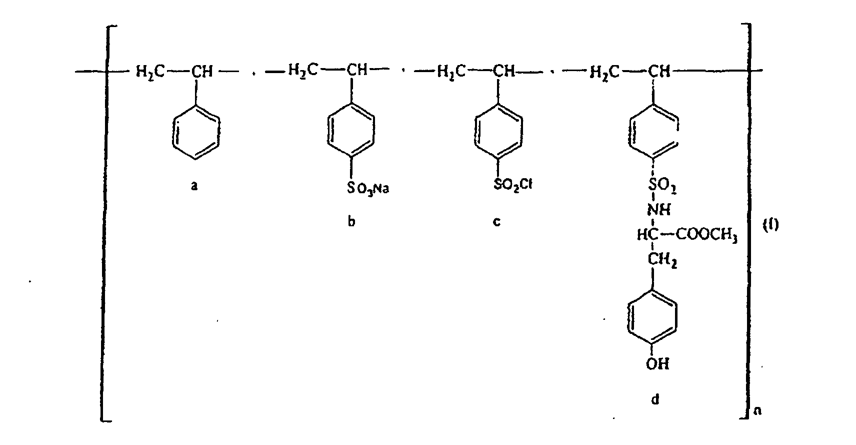 in which:
- a is between 5% and 15%;
- b is between 74% and 82%;
- c is between 0% and 5%; and
- d is between 5% and 15%;
- n is between 3 and 5000;
the sum a + b + c + d being equal to 100.

2. Resins according to claim 1, in which the index c is equal to 0%.

3. Resins according to claim 1 or 2, in which the index d is between 7% and 13%.

4. Resins according to any one of claims 1 to 3, **characterised by** the fact that the polystyrene is cross-linked by divinylbenzene.

5. Resins according to any one of the preceding claims, **characterised by** the fact that they are in the form of beads having a diameter between 35 and 800 µm in the dry state.

6. Resins according to claim 5, **characterised by** the fact that they are in the form of beads having a diameter between 35 and 75 µm in the dry state.

7. Use of at least one resin of formula (I) as defined in any one of claims 1 to 6, for the manufacture of plasma and blood purification columns.

8. Use according to claim 7, **characterised by** the fact that the columns are able to adsorb anti-EVIII antibodies.

9. Use according to claim 7 or 8, **characterised by** the fact that the columns are intended to process liquids containing anti-EVIII antibodies.

10. Use according to claim 9, **characterised by** the fact that the said liquids are plasmas or whole bloods of patients suffering from haemophilia A.

11. Purification columns containing at least one resin of formula (I) as defined in any one of claims 1 to 6, buffer balanced to a physiological pH.

12. Anti-VIII antibody purification device consisting of a continuous-circulation closed circuit comprising one or more purification columns as defined in claim 11.

13. Device according to claim 12, **characterised by** the fact that it comprises at least two columns disposed in series or in parallel.

14. Method of preparing functionalised polystyrene resins of formula (I) as defined in any one of claims 1 to 6, **characterised by** the fact that, in a first step, a chlorosulfonation reaction is performed consisting in making monochlorosulfonic acid (HSO₃Cl) react on non-functionalised polystyrene beads (PS) 2-5% cross-linked, in an HSO₃Cl/PS molar ratio greater than 8, in order to obtain a polystyrene carrying parachlorosulfonic functions (PSSO₂Cl), then in a second step esterifying the parachlorosulfonic (SO₂Cl) functions of the polystyrene PSSO₂Cl thus obtained by the methyl ester of L-tyrosine (TyrOMe) in the form of hydrochloride previously dissolved in an organic solvent medium in the presence of a tertiary amine, the TyrOMe/SO₂Cl molar ratio (R) being between 0.1 and 1, the tertiary amine/TyrOMe molar ratio (R') being between 1 and 2 and the tertiary amine/SO₂Cl molar ratio (R") being between 1 and 2, in order to obtain a resin of formula (I).

15. Method according to claim 14, **characterised by** the fact that the molar ratio (R) is equal to 0.15, the molar ratio (R') is equal to 2 and the molar ratio (R") is equal to 1.

16. Method according to claim 14 or 15, **characterised by** the fact that the cross-linked non-functionalised polystyrene beads used during the first step are polystyrene beads cross-linked by divinylbenzene.

17. Method according to any one of claims 14 to 16, **characterised by** the fact that the chlorosulfonation reaction is performed at a temperature between 30° and 60°C.

18. Method according to any one of claims 14 to 17, **characterised by** the fact that, when the synthesis is terminated, the resin of formula (I) is washed with an alkalinizing agent able to hydrolyse the residual parachlorosulfonyl functions without saponifying the estermethylic functions of the L-tyrosine.

19. Method of *ex-vivo* purification of the anti-FVIII antibodies present in a liquid, **characterised by** the fact it consists of:
a) putting the said liquid in contact with at least one purification column containing at least one resin of formula (I) as defined in any one of claims 1 to 6, and
b) then separating the said liquid from the said resin of formula (I) on which the anti-FVIII antibodies have been adsorbed.

20. Purification method according to claim 19, **characterised by** the fact that the said liquid is blood plasma or whole blood.

21. Purification method according to claim 20, **characterised by** the fact that the blood plasma or whole blood are respectively blood plasma or whole blood of patients suffering from haemophilia A.
